# EUROPÄISCHE PATENTSCHRIFT

(11) **EP 2 864 063 B1**
(45) Veröffentlichungstag und Bekanntmachung des Hinweises auf die Patenterteilung: **11.08.2021**
(21) Anmeldenummer: 13728347.9
(22) Anmeldetag: 03.06.2013
(51) Int. Cl.: B21B 27/03, B23K 15/00, B23K 15/04

(54) **VERFAHREN ZUR HERSTELLUNG EINER VERBUNDWALZE UND DAMIT HERGESTELLTE VERBUNDWALZE**
METHOD FOR PRODUCING A COMPOSITE ROLL AND COMPOSITE ROLL PRODUCED THEREBY
PROCÉDÉ DE FABRICATION D'UN CYLINDRE COMPOSITE ET CYLINDRE COMPOSITE AINSI FABRIQUÉ

(30) Priorität: 26.06.2012 AT 502502012
(43) Veröffentlichungstag der Anmeldung: 29.04.2015
(73) Patentinhaber: Schröder, Karl H., Hong Kong (CN)
(72) Erfinder: Schröder, Karl H., Hong Kong (CN)
(74) Vertreter: Wirnsberger, Gernot
(86) Internationale Anmeldenummer: PCT/EP2013/061401
(87) Internationale Veröffentlichungsnummer: WO 2014/001024

(56) Entgegenhaltungen:
- EP-A1- 1 283 079
- WO-A1-2008/031581
- JP-A- S58 387
- JP-A- S6 046 889
- JP-A- H01 166 809
- JP-A- H01 237 083
- JP-A- H08 155 660
- JP-A- S61 219 405
- JP-A- 2004 148 321

## Beschreibung

Die Erfindung betrifft ein Verfahren zur Herstellung einer Verbundwalze.

Des Weiteren betrifft die Erfindung eine Verbundwalze, umfassend einen Grundkörper und eine darauf durch heißisostatisches Pressen eines Pulvers aufgebrachte Arbeitsschicht sowie seitlich am Grundkörper anschließende Zapfen.

Warmarbeitswalzen für Flachprodukte aus Stahl wie Stahlband oder Stahlblech sind heute im Stand der Technik fast ausschließlich als Verbundwalzen ausgeführt, die im Schleudergussverfahren hergestellt sind bzw. werden. Dabei ist eine integrierte, äußere Arbeitsschicht vorgesehen, die auf einer Seele angebracht ist, die einen Grundkörper mit angeformten Zapfen umfasst. Die Arbeitsschicht besteht üblicherweise aus einem legierten Hartguss, hochchromlegierten Stahl oder Werkzeugstahl. Die Seele besteht in der Regel aus Gusseisen mit Kugelgrafit. Daneben gibt es auch Walzen, bei welchen eine Stahlachse mit einer Arbeitsschicht umgossen ist. Für kleine Auslegungen eines Walzwerkes gibt es auch Walzen, bei denen die Arbeitsschicht durch heißisostatisches Pressen eines Pulvers bzw. fachsprachlich "HIPen" aufgebracht ist.

Kaltarbeitswalzen für Flachprodukte aus Stahl oder Nichteisenmetalle werden ebenso wie Warmarbeitswalzen für Nichteisenmetalle gemäß dem Stand der Technik einteilig aus einem Schmiedestahl gefertigt, wonach anschließend ein Härten der Walzen im Arbeitsbereich erfolgt, insbesondere durch induktives Härten.

In der Walztechnik besteht das Bedürfnis, die Leistungsfähigkeit von Walzen durch Verschleißverminderung weiter zu steigern. Hierfür ist es erforderlich, dass die Arbeitsschicht, die am Grundkörper der Walze gebildet ist und die im Einsatz den höchsten Belastungen unterliegt, möglichst verschleißbeständig ist. Der Grundkörper ist im Zusammenspiel mit der Arbeitsschicht bezüglich der Verschleißbeständigkeit der Walze auch beachtlich und soll ebenfalls hinsichtlich einer Langlebigkeit der Walze optimiert sein. Schließlich gilt Selbiges auch für die Zapfen, welche mit einem Antrieb in Verbindung stehen und über welche eine Kraftübertragung erfolgt.

JP H01 237083 A offenbart eine Walze mit einem hohlen Grundkörper, auf dem eine Schicht zum Fügen eines inneren und äußeren Zylinders aufgebracht ist, die durch HIPen erstellt wird. Der Grundkörper ist zentral von einem Schaft durchsetzt, über welchen die Walze in Rotation versetzt werden kann.

Aus der JP 2004 148321 A ist eine Verbundwalze zum kontinuierlichen Walzen von Stahlbändern bekannt geworden, die einen Grundkörper mit seitlichen Zapfen aufweist, wobei am Grundkörper eine Arbeitsschicht durch HIPen aufgebracht ist.

JP H01-166809 offenbart eine Walze mit einem Grundkörper und an diesem angeschweißten Zapfen sowie einer am Grundkörper durch HIPen aufgebrachten Arbeitsschicht.

Arbeitswalzen für Warm- oder Kaltbandstraßen weisen eine erhebliche Dimension entlang der Längsachse der Walze auf, die durchaus mehrere Meter betragen kann. Diese großen Dimensionen erschweren es, hoch verschleißfeste Walzen auf kostengünstige Weise herzustellen.

Aufgabe der Erfindung ist es, ein Verfahren der eingangs genannten Art anzugeben, mit dem hoch verschleißbeständige Verbundwalzen auf effiziente und kostengünstige Weise herstellbar sind, wobei das Verfahren gleichzeitig flexibel in Bezug auf verschiedene Walzendimensionen sein soll.

Ein weiteres Ziel der Erfindung ist es, eine Verbundwalze der eingangs genannten Art anzugeben, die weitgehend unabhängig von deren Länge effizient und kostengünstig herstellbar ist.

Die verfahrensmäßige Aufgabe der Erfindung wird mit einem Verfahren nach Anspruch 1 gelöst, wobei bei dem Verfahren nach dem heißisostatischen Pressen des Grundkörpers durch Elektronenstrahlschweißen Zapfen am Grundkörper angebracht werden.

Die Erfindung macht sich die Erkenntnis zunutze, dass entgegen fachmännischen Erwartungen die Zapfen, welche im Betrieb für eine Kraftübertragung sorgen, nicht einteilig mit dem Grundkörper ausgebildet oder an diesem durch Befestigungsmittel befestigt sein müssen, sondern auch nachträglich durch Schweißen angebracht werden können. Überraschend hat sich gezeigt, dass entsprechende Nahtstellen an der Verbindung von Zapfen und Grundkörper eine ausreichende Stabilität aufweisen, um auch hohen Belastungen im Einsatz standzuhalten. Weil die Zapfen erst nachträglich angebracht werden, ist es auch möglich, Grundkörper mit Dimensionen einzusetzen, welche die gegenwärtig größten verfügbaren Anlagen zum heißisostatischen Pressen mit Arbeitszonen von 4,0 Meter ausnutzen. Somit können einerseits hoch verschleißbeständige Verbundwalzen erstellt werden, weil die Arbeitsschicht durch heißisostatisches Pressen aufgebracht wird, wofür ein geeignetes Pulver ohne Weiteres gefunden werden kann (z. B. ein Werkzeugstahlpulver). Andererseits können aufgrund der Ausnutzung der Dimensionen bestehender heißisostatischer Anlagen auch Verbundwalzen mit entsprechenden Dimensionen der Arbeitsschicht erstellt werden, was durch die nachträgliche Anbringung der Zapfen möglich wird.

Erfindungsgemäß werden die Zapfen durch Elektronenstrahlschweißen am Grundkörper angebracht. Elektronenstrahlschweißen führt nur zu einer lokal sehr begrenzten Erwärmung, sodass der Grundkörper beim Anschweißen thermisch nicht belastet wird bzw. eine Wärmebelastung am Grundkörper äußerst niedrig ist. Dies ist insbesondere deswegen von Vorteil, weil eine maximale Einsatzdauer der Verbundwalze nicht nur durch die Arbeitsschicht alleine, sondern auch durch den Grundkörper bzw. Ballen bestimmt wird.

Es ist zweckmäßig, dass die Zapfen beim Anschweißen am Grundkörper fix positioniert werden, damit eine möglichst perfekte Verbindung von Zapfen und Grundkörper erreicht wird. Ein Positionieren bzw. Fixieren kann durch Schweißhefter, durch eine Schrumpfverbindung oder, bei geeigneter Ausbildung von Grundkörper und Zapfen, durch Zuganker erfolgen. Möglich ist auch eine Gewindeverbindung zwischen Zapfen und Grundkörper, sodass die zu verschweißenden Gegenstände relativ zueinander beim Anschweißen stabil in Position bleiben.

Vor dem heißisostatischen Pressen wird in den Grundkörper eine durchgängige Öffnung eingebracht. Das Einbringen der Öffnung erfolgt vorzugsweise durch spanabhebende Bearbeitung, bevorzugt Bohren. Die durchgängige Öffnung im Grundkörper erleichtert eine kontrollierte Einstellung von Verschleißeigenschaften sowie des Eigenspannungszustandes des Grundkörpers.

Pulver wird beim heißisostatischen Pressen üblicherweise in einem Blechmantel eingeschlossen, der so bemessen ist, dass nach dem mit dem Sintern verbundenen Schrumpf eine gewünschte Schichtdicke erreicht wird. Es kann vorgesehen sein, dass der Grundkörper länger als die Arbeitsschicht ausgeführt ist und zumindest an einer Stelle, bevorzugt an beiden Enden, aus dem Blechmantel bzw. der Pressdose für das Pulver ragt, die seitlich am Grundkörper befestigt wird. Der Grundkörper ist dann etwas länger als die Arbeitsschicht, wodurch sich beim nachfolgenden Anschweißen der Zapfen der Vorteil ergibt, dass die Arbeitsschicht nicht durch eine Wärmeentwicklung beim Schweißen beeinträchtigt werden kann. Ragt der Grundkörper beim heißisostatischen Pressen aus der Pressdose, hat dies auch den Vorteil, dass beim Aufheizen ein Temperaturgradient im Grundkörper deutlich verringert ist, während an einer Außenseite desselben ein Aufsintern aus einem Pulver, beispielsweise einem Werkzeugstahlpulver, erfolgt.

Es ist zweckmäßig, wenn der Grundkörper zum heißisostatischen Pressen in den Befestigungsbereichen der Pressdose mit einem Aufmaß bereitgestellt wird. Die Befestigungsbereiche liegen an den Enden des Grundkörpers. Ist dort ein Aufmaß vorgesehen, so kann die Pressdose für das heißisostatische Pressen dort befestigt werden. In den übrigen Bereichen ist dann ein Abstand zwischen der Pressdose und dem Grundkörper gegeben. Im entsprechenden Freiraum bildet sich während des heißisostatischen Pressens aus dem in den Freiraum eingefüllten Pulver die Arbeitsschicht aus.

Es kann vorgesehen sein, dass der Grundkörper vor dem heißisostatischen Pressen vorerwärmt wird. Eine Vorerwärmung bringt den Vorteil, dass im Grundkörper bzw. Ballen beim Anbringen der Arbeitsschicht durch heißisostatisches Pressen keine großen Temperaturgradienten auftreten, welche ein Gefüge des Grundkörpers nachteilig beeinflussen könnten. Die Vorerwärmung kann grundsätzlich beliebig erfolgen, sollte aber den Temperaturgradienten im Grundkörper berücksichtigen. Bevorzugt wird die Vorerwärmung durch konduktives Heizen durchgeführt, da in diesem Fall der Temperaturgradient gegen null geht.

Um eine Verfahrensdauer möglichst kurz zu halten, kann der Grundkörper nach dem heißisostatischen Pressen im warmen Zustand aus einer Presskammer entnommen werden. Es ist jedoch auch möglich, den Grundkörper mit darauf aufgebrachter Arbeitsschicht in üblicher Weise langsam abkühlen zu lassen.

Nach dem heißisostatischen Pressen kann der Grundkörper samt Arbeitsschicht noch vor dem Anschweißen der Zapfen einer Wärmebehandlung unterworfen werden, insbesondere um die mechanischen Kennwerte zu optimieren.

Als Grundkörper wird bevorzugt ein gut schweißbarer Stahl eingesetzt. Hierfür kommen insbesondere übliche Schmiedestähle infrage, z. B. Stähle aufweisend 0,14 bis 0,19 Gew.-% Kohlenstoff, maximal 0,40 Gew.-% Silicium, 1,0 bis 1,3 Gew.-% Mangan sowie 0,80 bis 1,1 Gew.-% Chrom. Derartige Schmiedestähle werden auch oft unter der Bezeichnung 16MnCr5 angeführt und entsprechen den Werkstoffnummern DIN 1.7131 bzw. 1.7139.

Zweckmäßig ist es, dass Stirnseiten des Grundkörpers vor dem Anschweißen der Zapfen mechanisch bearbeitet, insbesondere geschliffen, werden, um eine bestmögliche Verbindung von Zapfen und Grundkörper zu erhalten.

Das weitere Ziel der Erfindung wird durch eine Verbundwalze gemäß Anspruch 11 erreicht, bei welcher die Zapfen durch Elektronenstrahlschweißen angeschweißt sind.

Eine erfindungsgemäße Verbundwalze kann effektiv und kostengünstig hergestellt werden, und zwar auch dann, wenn deren Dimensionen vier oder mehr Meter betragen. Dabei sind die Zapfen durch Elektronenstrahlschweißen angeschweißt, weil dies den Grundkörper während des Schweißens nicht oder nur vernachlässigbar thermisch belastet.

Der Grundkörper weist entlang seiner Längsachse eine durchgehende Öffnung auf. Über diese Bohrung lassen sich Eigenspannungszustände kontrollieren und es treten insbesondere während einer Herstellung geringere Temperaturgradienten auf und es kann beim Abschrecken bzw. Härten eine Kühlung des Grundkörpers von innen erfolgen.

Der Grundkörper einer erfindungsgemäßen Verbundwalze besteht wie erläutert bevorzugt aus einem warmumformbaren Stahl, insbesondere einem Schmiedestahl, der bevorzugt gut schweißbar ist.

Weitere Merkmale, Vorteile und Wirkungen der Erfindung ergeben sich aus dem nachfolgend dargestellten Ausführungsbeispiel. In den Zeichnungen, auf welche dabei Bezug genommen wird, zeigen:
Fig. 1 einen Rohling eines Grundkörpers vor einem heißisostatischen Pressen;
Fig. 2 einen Grundkörper gemäß Fig. 1 in einer Pressdose zum heißisostatischen Pressen;
Fig. 3 eine Verbundwalze.

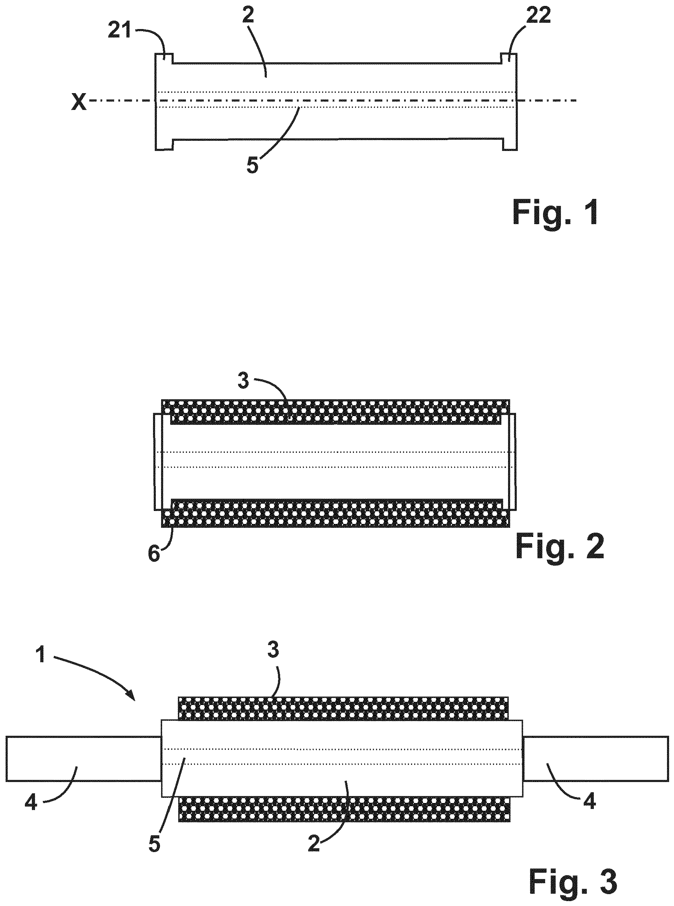

Anhand der Fig. 1 bis 3 ist ein erfindungsgemäßes Verfahren im Detail näher dargestellt. In Fig. 1 ist ein Rohling eines Grundkörpers 2 bzw. Ballens gezeigt. Der Rohling des Grundkörpers 2 ist üblicherweise aus einem Schmiedestahl gebildet, der gut schweißbar ist (z. B. ein Stahl mit einer Zusammensetzung gemäß DIN 1.7131), und ist im Querschnitt zur Längsachse X bis zu den Enden 21, 22 hin rund ausgebildet. An den Enden 21, 22 weist der Rohling ein Aufmaß auf. Dieses Aufmaß an den Enden 21, 22 bemisst sich vornehmlich am Ausscheidungsdurchmesser der zu erstellenden Walze.

In Fig. 2 ist der Rohling des Grundkörpers 2 aus Fig. 1 zusammen mit einer Pressdose 6 bzw. einem Blechmantel dargestellt. Die Pressdose 6 ist etwa mittig an den Enden 21, 22 des Rohlings des Grundkörpers 2 im Bereich des Aufmaßes befestigt, beispielsweise durch Schweißen. In einem Freiraum zwischen der Pressdose 6 und dem Rohling des Grundkörpers 2, der sich durch die Befestigung der Pressdose 6 im Aufmaßbereich bzw. den Enden 21, 22 ergibt, ist ein pulvermetallurgisch hergestelltes Werkzeugstahlpulver positioniert, das später nach heißisostatischem Pressen eine Arbeitsschicht 3 bildet. Der Rohling des Grundkörpers 2 ragt, wie in Fig. 2 ersichtlich, an den Enden 21, 22 über die Pressdose 6 hinaus. Dies bringt beim heißisostatischen Pressen in einer Presskammer den Vorteil, dass auch im Inneren des Grundkörpers 2, der mit einer zentralen Öffnung 5 bzw. Bohrung versehen ist, Konvektion auftritt und somit eine thermische Belastung bzw. Temperaturgradienten innerhalb des Grundkörpers 2 minimiert sind. Nach Aufbringen der Arbeitsschicht 3 durch heißisostatisches Pressen, üblicherweise im Temperaturbereich von 1050 °C bis 1250 °C und bei Drücken von etwa 100 bis 150 MPa in einer Schutzgasatmosphäre aus z. B. Argon oder Stickstoff, wird der Grundkörper 2 samt aufgebrachter Arbeitsschicht 3 aus der Presskammer entnommen und die Pressdose 6 entfernt. Die Arbeitsschicht 3 ist aufgrund des heißisostatischen Pressens fest mit dem Grundkörper 2 verbunden. Eine Längserstreckung der Arbeitsschicht 3 ist dabei so gewählt, dass sich diese über die gesamte Ballenlänge des Walzenballens erstreckt, also der entsprechend dimensionierten Länge des Grundkörpers 2, ausgenommen die Enden 21, 22. Anschließend werden zwei Zapfen 4 an den Stirnseiten des Grundkörpers 2 befestigt, wobei die Stirnseiten zuvor noch bearbeitet, beispielsweise geschliffen, werden können. Die Aufmaßbereiche an den Enden 21, 22 können auch noch abgedreht werden. Hierfür werden zunächst die zwei Zapfen 4 an den Stirnseiten fest anliegend mit einem minimalen Spalt positioniert. Sind die Zapfen 4 wie der Grundkörper 2 mit einer zentralen, längserstreckten Öffnung bzw. Bohrung versehen, kann ein Anstellen der Zapfen 4 durch Zuganker erfolgen. Sind die Zapfen 4 wie dargestellt ohne solche Bohrungen ausgebildet, können diese durch geeignete Anpressmittel, beispielsweise ein hydraulisch betätigter Kolben, an die Stirnseiten angepresst werden. Wenn die Zapfen 4 an die Stirnseiten des Grundkörpers 2 angestellt sind, erfolgt in einem nächsten Schritt ein Verbinden der Zapfen 4 mit dem Grundkörper 2 durch Elektronenstrahlschweißen, üblicherweise bei einem Druck von 10⁻³ mbar oder weniger. Die Verbundwalze 1 gemäß Fig. 3 ist damit im Wesentlichen erstellt. Im Bereich der Enden 21, 22, wo noch ein Aufmaß vorliegt, erfolgt eine Nachbearbeitung durch spanabhebende Verfahren, um die Arbeitsschicht seitlich freizustellen, wenn dies nicht bereits zuvor erfolgt ist. Danach erfolgt die Fertigbearbeitung der Walze.

In praktischen Versuchen hat sich gezeigt, dass eine erfindungsgemäß hergestellte Verbundwalze 1 trotz des Anbringens der Zapfen 4 durch Schweißen hohen Belastungen standhält. Dabei ist es aufgrund des Herstellungsprozesses möglich, die Verbundwalze 1 mit einer Gesamtlänge von mehr als vier Meter entlang der Längsachse X auszubilden, sodass die Verbundwalze 1 insbesondere als Walze in Warm- oder Kaltbandstraßen eingesetzt werden kann, vor allem bei der Verarbeitung von Halbzeugen aus Stahl wie Bändern oder Blechen.

## Patentansprüche

1. Verfahren zur Herstellung einer Verbundwalze (1), wobei auf einem eine durchgehende Öffnung (5) aufweisenden Grundkörper (2) eine Arbeitsschicht (3) durch heißisostatisches Pressen eines Pulvers erzeugt wird, wobei die durchgehende Öffnung (5) entlang einer Längsachse (X) des Grundkörpers (2) verläuft und vor dem heißisostatischen Pressen in diesen eingebracht wird, wobei nach dem heißisostatischen Pressen des Grundkörpers (2) durch Elektronenstrahlschweißen Zapfen (4) am Grundkörper (2) angebracht werden.

2. Verfahren nach Anspruch 1, wobei die Zapfen (4) beim Anschweißen am Grundkörper (2) fix positioniert werden.

3. Verfahren nach Anspruch 1 oder 2, wobei der Grundkörper (2) zum heißisostatischen Pressen in seitlichen Bereichen in einer Pressdose (6) befestigt wird, wobei der Grundkörper (2) an zumindest einer Stelle, bevorzugt an beiden Enden (21, 22), aus der Pressdose (6) ragt.

4. Verfahren nach einem der Ansprüche 1 bis 3, wobei der Grundkörper (2) zum heißisostatischen Pressen in den Befestigungsbereichen der Pressdose (6) mit einem Aufmaß bereitgestellt wird.

5. Verfahren nach einem der Ansprüche 1 bis 4, wobei der Grundkörper (2) vor dem heißisostatischen Pressen vorerwärmt wird.

6. Verfahren nach Anspruch 5, wobei die Vorerwärmung durch konduktives Heizen durchgeführt wird.

7. Verfahren nach einem der Ansprüche 1 bis 6, wobei der Grundkörper (2) nach dem heißisostatischen Pressen im warmen Zustand aus einer Presskammer entnommen wird.

8. Verfahren nach einem der Ansprüche 1 bis 7, wobei der Grundkörper (2) samt Arbeitsschicht (3) nach dem heißisostatischen Pressen und vor dem Anschweißen der Zapfen (4) einer Wärmebehandlung unterworfen wird.

9. Verfahren nach einem der Ansprüche 1 bis 8, wobei als Grundkörper (2) ein gut schweißbarer Stahl eingesetzt wird.

10. Verfahren nach einem der Ansprüche 1 bis 9, wobei Stirnseiten des Grundkörpers (2) vor dem Anschweißen der Zapfen (4) mechanisch bearbeitet, insbesondere geschliffen, werden.

11. Verbundwalze (1), umfassend einen Grundkörper (2) und eine darauf durch heißisostatisches Pressen eines Pulvers auf den entlang seiner Längsachse (X) eine durchgehende Öffnung (5) aufweisenden Grundkörper (2) aufgebrachte Arbeitsschicht (3) sowie seitlich am Grundkörper (2) anschließende Zapfen (4), wobei die Zapfen (4) durch Elektronenstrahlschweißen angeschweißt sind.

12. Verbundwalze (1) nach Anspruch 11, wobei der Grundkörper (2) aus einem gut schweißbaren Stahl besteht.

## Claims

1. A method for manufacturing a composite roller (1), wherein a working layer (3) is generated on a base body (2) having a continuous opening (5) via the hot isostatic pressing of a powder, wherein the continuous opening (5) runs along a longitudinal axis (X) of the base body (2), and is incorporated into the latter prior to hot isostatic pressing, wherein pegs (4) are attached to the base body (2) via electron beam welding after hot isostatic pressing of the base body (2).

2. The method according to claim 1, wherein the pegs (4) are fixedly positioned while being welded to the base body (2) .

3. The method according to claim 1 or 2, wherein the base body (2) for hot isostatic pressing is fastened in lateral areas in a pressing can (6), wherein the base body (2) protrudes out of the pressing can (6) at least at one location, preferably at both ends (21, 22).

4. The method according to one of claims 1 to 3, wherein the base body (2) for hot isostatic pressing is provided with an allowance in the fastening areas of the pressing can (6) .

5. The method according to one of claims 1 to 4, wherein the base body (2) is preheated prior to hot isostatic pressing.

6. The method according to claim 5, wherein the preheating is performed via conductive heating.

7. The method according to one of claims 1 to 6, wherein the base body (2) is removed from a pressing chamber in a hot state after hot isostatic pressing.

8. The method according to one of claims 1 to 7, wherein the base body (2) including the working layer (3) is subjected to a heat treatment after hot isostatic pressing and prior to welding on the pegs (4).

9. The method according to one of claims 1 to 8, wherein a readily weldable steel is used as the base body (2).

10. The method according to one of claims 1 to 9, wherein end faces of the base body (2) are machined, in particular ground, prior to welding on the pegs (4).

11. A composite roller (1), comprising a base body (2) and a working layer (3) applied thereto via the hot isostatic pressing of a powder onto the base body (2) having a continuous opening (5) along its longitudinal axis (X), as well as pegs (4) laterally adjoining the base body (2), wherein the pegs (4) are welded on via electron beam welding.

12. The composite roller (1) according to claim 11, wherein the base body (2) consists of a readily weldable steel.

## Revendications

1. Procédé de fabrication de cylindres composites (1), sachant qu'une couche de travail (3) est produite sur un corps de base (2) comportant une ouverture continue (5) par compression isostatique à chaud d'une poudre, sachant que l'ouverture continue (5) passe le long d'un axe longitudinal (X) du corps de base (2) et est aménagé dans celui-ci avant la compression isostatique à chaud, sachant que des axes (4) sont placés sur le corps de base (2) par soudage par bombardement électronique après la compression isostatique à chaud du corps de base (2).

2. Procédé selon la revendication 1, sachant que les axes (4) sont positionnés de façon fixe lors du soudage sur le corps de base (2).

3. Procédé selon la revendication 1 ou 2, sachant que pour la compression isostatique à chaud dans les zones latérales, le corps de base (2) est fixé dans un manchon de compression (6), sachant que le corps de base (2) dépasse du manchon de compression (6) au moins à un endroit, de préférence aux deux extrémités (21, 22).

4. Procédé selon l'une quelconque des revendications 1 à 3, sachant que le corps de base (2) est préparé avec une surépaisseur pour la compression isostatique à chaud dans les zones de fixation du manchon de compression (6).

5. Procédé selon l'une quelconque des revendications 1 à 4, sachant que le corps de base (2) est préchauffé avant la compression isostatique à chaud.

6. Procédé selon la revendication 5, sachant que le préchauffage est effectué par chauffage par conduction.

7. Procédé selon l'une quelconque des revendications 1 à 6, sachant que le corps de base (2) est enlevé d'une chambre de compression à l'état chaud après la compression isostatique à chaud.

8. Procédé selon l'une quelconque des revendications 1 à 7, sachant que le corps de base (2) avec la couche de travail (3) est soumis à un traitement thermique après la compression isostatique à chaud et avant le soudage des axes (4).

9. Procédé selon l'une quelconque des revendications 1 à 8, sachant qu'un acier bien soudable est utilisé en tant que corps de base (2).

10. Procédé selon l'une quelconque des revendications 1 à 9, sachant que les faces avant du corps de base (2) sont usinées mécaniquement, en particulier rectifiées, avant le soudage des axes (4).

11. Cylindre composite (1), comprenant un corps de base (2) et une couche de travail (3) appliquée dessus par compression isostatique à chaud d'une poudre sur le corps de base (2) comportant le long de son axe longitudinal (X) une ouverture continue (5) et des axes (4) se raccordant latéralement au corps de base (2), sachant que les axes (4) sont soudés par soudage par bombardement électronique.

12. Cylindre composite (1) selon la revendication 11, sachant que le corps de base (2) est composé d'un acier bien soudable.
